# EUROPEAN PATENT SPECIFICATION

(11) **EP 3 108 529 B1**
(45) Date of publication and mention of the grant of the patent: **21.08.2019**
(21) Application number: 15751466.2
(22) Date of filing: 13.02.2015
(51) Int. Cl.: H01M 8/02, H01M 8/242, H01M 8/0273, H01M 8/2483, H01M 8/1018

(54) **ELECTROCHEMICAL CELL WITH PROTECTOR GASKET ARRANGEMENT**
ELEKTROCHEMISCHE ZELLE MIT SCHUTZDICHTUNGSANORDNUNG
CELLULE ÉLECTROCHIMIQUE COMPRENANT UN AGENCEMENT DE JOINT DE PROTECTION

(30) Priority: 19.02.2014 US 201461941809 P; 12.02.2015 US 201514620412
(43) Date of publication of application: 28.12.2016
(73) Proprietor: Proton Energy Systems, Inc., Wallingford, CT 06492 (US)
(72) Inventor: ROEMER, Andrew, Pomfret Center, CT 06259 (US); CARTER, Blake, Middletown, CT 06457 (US); DALTON, Luke, Cromwell, CT 06416 (US)
(74) Representative: Delorme, Nicolas
(86) International application number: PCT/US2015/015796
(87) International publication number: WO 2015/126748

(56) References cited:
- WO-A1-96/12316
- WO-A1-99/61684
- US-A- 5 284 718
- US-A1- 2005 084 734
- US-A1- 2006 266 641
- US-A1- 2008 305 384
- US-A1- 2009 325 037

## Description

### BACKGROUND OF THE INVENTION

The subject matter disclosed herein relates to electrochemical cells, and in particular to an electrochemical cell having gaskets arranged to protect the membrane and seal the cell to prevent fluid leakage.

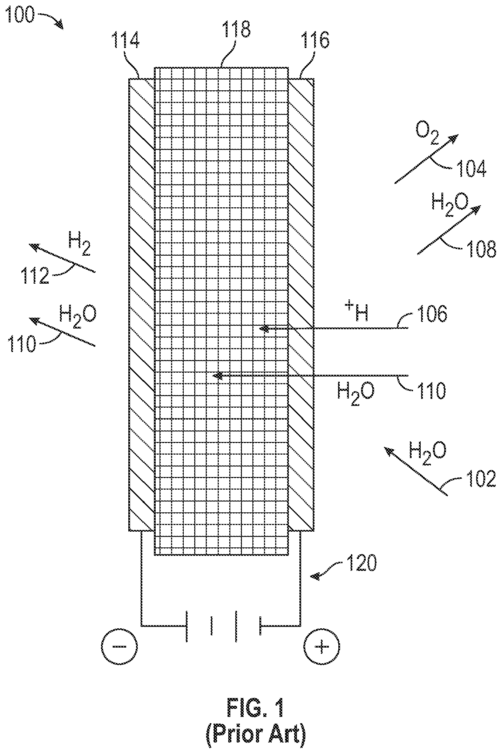

Electrochemical cells are energy conversion devices, usually classified as either electrolysis cells or fuel cells, including, but not limited to, electrolysis cells having a hydrogen water feed. A proton exchange membrane electrolysis cell functions as a hydrogen generator by electrolytically decomposing water to produce hydrogen and oxygen gases. Referring to FIG. 1, in a typical single anode feed water electrolysis cell 101, process water 102 is reacted at oxygen electrode (anode) 103 to form oxygen gas 104, electrons, and hydrogen ions (protons) 105. The reaction is created by the positive terminal of a power source 106 electrically connected to anode 103 and the negative terminal of a power source 106 connected to hydrogen electrode (cathode) 107. The oxygen gas 104 and a portion of the process water 102' exit cell 101, while protons 105 and water 102" migrate across proton exchange membrane 108 to cathode 107 where hydrogen gas 109, is formed.

The typical electrochemical cell includes a number of individual cells arranged in a stack with fluid, typically water, forced through the cells at high pressures (e.g., a pressure differential of about 206.8 kPa (30 psi) from the cell inlet to the outlet). The cells within the stack are sequentially arranged including a cathode, a proton exchange membrane, and an anode. The cathode/membrane/anode assemblies (hereinafter "membrane and electrode assembly") are supported on either side by packs of screen or expanded metal, which are in turn surrounded by cell frames and separator plates to form reaction chambers and to seal fluids therein. The screen packs establish flow fields within the reaction chambers to facilitate fluid movement and membrane hydration, and to provide mechanical support for the membrane and a means of transporting electrons to and from the electrodes.

As stated above, the screen packs support the membrane and electrode assembly. The membrane is typically only about 0.05-0.30 mm (0.002-0.012 inches) in thickness when hydrated, and the electrodes are thin structures (less than about 0.05 mm (0.002 inches) of high surface area noble metals pressed or bonded to either side of the membrane and electrically connected to a power source. When properly supported, the membrane serves as a rugged barrier between the hydrogen and oxygen gases. The screen packs, which are positioned on both sides of the membrane against the electrodes, impart structural integrity to the membrane and electrode assembly.

It should be appreciated that it is desirable to provide sealing features to prevent the leakage of fluids from the cell, particularly under the high pressure levels achieved during operation. The outer perimeter of the electrochemical cell reaction chambers are defined by frame members. The interface between the frame members and adjacent components, such as a bipolar or separator plate typically includes a gasket member that engages ribs on the frame member to provide the desired seal. At the interface between the MEA and the frame members, the membrane itself could be used to form the seal. In some applications it is desirable to use a thinner membrane to achieve higher efficiencies and to reduce costs. One concern that arises with these thinner membranes is that the frame member ribs penetrate too deeply into the membrane potentially causing structural issues for the membrane under pressure as the membrane may creep and expand. While reducing the size of the ribs is possible in some cases, manufacturing limitations may limit this solution. In some instances, a gasket has been inserted on one size of the membrane such that the ribs from only one frame engage the membrane.

Accordingly, while existing electrochemical cell systems are suitable for their intended purposes the need for improvement remains, particularly in allowing for flexibility in the thickness of the membrane used, reducing costs and improving manufacturability.

US 2006/266641 discloses an electrochemical cell having a membrane electrode assembly (MEA), and a gas diffusion layer (GDL) disposed proximate a side of the MEA with an edge of the GDL disposed inboard of an edge of the MEA.

US 2008/305384 discloses an electrode-membrane-frame assembly for a polyelectrolyte fuel cell which is held between one pair of separators and constitutes an electric cell module in the fuel cell is constituted of a membrane electrode assembly, a first frame body which has a separator-side surface on which a sealing member for sealing between the member and one separator and a membrane-side surface located on one surface of the peripheral edge portion of the membrane electrode assembly and is formed of a thermoplastic resin material, and a second frame body that has a separator-side surface on which a sealing member for sealing between the member and the other separator and a membrane-side surface located on the other surface of the peripheral edge portion of the membrane electrode assembly and is formed of a thermoplastic resin material and fitted to the first frame body holding the peripheral edge portion of the membrane electrode assembly between the second frame body and the first frame body.

### BRIEF DESCRIPTION OF THE INVENTION

According to one aspect of the invention, an electrochemical cell according to claim 1 is provided. The electrochemical cell includes a first frame, the frame having at least one first cleat feature arranged on one side, the at least one first cleat feature having a first height. A second frame is provided having at least one second cleat feature arranged on one side, the at least one second cleat feature having a second height. A membrane electrode assembly (MEA) is disposed between the first frame and the second frame, the MEA having a first electrode disposed on a first side of a membrane, the MEA further having a second electrode disposed on a second side opposite the first electrode. A first gasket is disposed between the membrane and the first frame, the first gasket engaging the at least one first cleat feature. A second gasket is disposed between the membrane and the second frame, the second gasket engaging the at least one second cleat feature.

These and other advantages and features will become more apparent from the following description taken in conjunction with the drawings.

### BRIEF DESCRIPTION OF THE DRAWING

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic illustration of a partial prior art electrochemical cell showing an electrochemical reaction;
FIG. 2 illustrates a perspective view of an exploded assembly of an exemplary electrochemical cell in accordance with embodiments of the invention;
FIG. 3 illustrates an exploded side view of a single cell assembly;
FIG. 4 illustrates a side sectional view of the single cell assembly of FIG. 3;
FIG. 5 illustrates an enlarged side sectional view of a portion of the single cell assembly of FIG. 5;
FIG. 6 illustrates an end view of a frame member for use with the single cell assembly of FIG. 3;
FIG. 7 illustrates an enlarged perspective view of a portion of the frame member of FIG. 7; and
FIG. 8 illustrates a side view of a gasket for use with the single cell assembly of FIG. 3.

The detailed description explains embodiments of the invention, together with advantages and features, by way of example with reference to the drawings.

### DETAILED DESCRIPTION OF THE INVENTION

Embodiments of the invention provide advantages in allowing the thickness of electrochemical cell membrane to be changed without affecting the reaction volume on either the anode or cathode side of the electrochemical cell. Still other embodiments of the invention allow for sealing of the interface of the MEA with frame members without compromising the integrity of the membrane. Still further embodiments provide advantages in allowing the same frame member to be used on both the anode and cathode sides of the electrochemical cell.

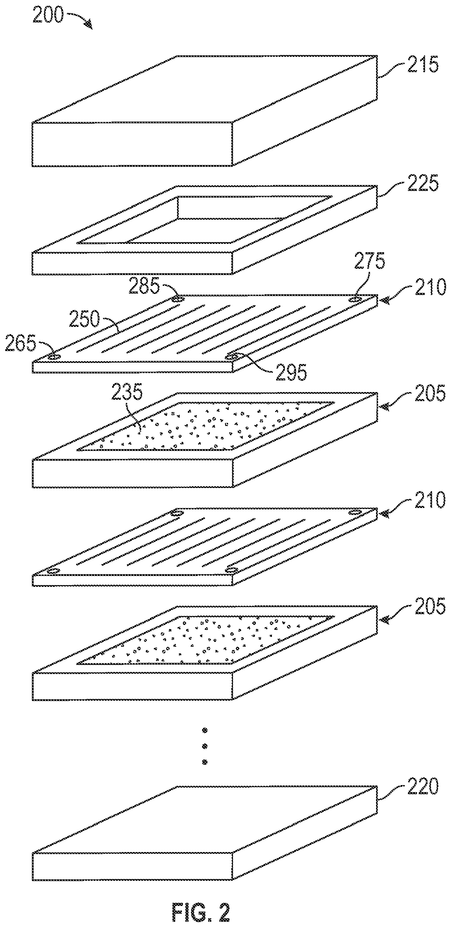

Referring first to Figure 2, an exemplary electrochemical cell 200 that may be suitable for operation as an anode feed electrolysis cell, cathode feed electrolysis cell, fuel cell, or regenerative fuel cell is depicted in an exploded assembly isometric view. Thus, while the discussion below may be directed to an anode feed electrolysis cell, cathode feed electrolysis cells, fuel cells, and regenerative fuel cells are also contemplated. Cell 200 is typically one of a plurality of cells arranged in a cell stack as part of an electrochemical cell system. When cell 200 is used as an electrolysis cell, power inputs are generally between about 1.48 volts and about 3.0 volts, with current densities between about 538.2 A/m2 (50 A/ft2 amperes per square foot) and about 43055.6 A/m2 (4,000 A/ft2). When used as a fuel cell power outputs range between about 0.4 volts and about 1 volt, and between about 1.1 A/m2 (0.1 A/ft2) and about (107639.1 A/m2 10,000 A/ft2). The number of cells within the stack, and the dimensions of the individual cells is scalable to the desired cell power output and/or gas output requirements. Accordingly, application of electrochemical cell 200 may involve a plurality of individual cells 200 arranged electrically either in series or parallel depending on the application. Cells 200 may be operated at a variety of pressures, such as up to or exceeding 344 kpa (50 psi) (pounds-per-square-inch), up to or exceeding about 689.5 kpa (100 psi,) up to or exceeding about 3447.4kpa (500 psi), up to or exceeding about 17236.9 kpa (2500 psi,) or even up to or exceeding about 68947.6 kpa (10,000 psi, for example.

In an embodiment, cell 200 includes a plurality of membrane-electrode-assemblies (MEAs) 205 alternatively arranged with a plurality of flow field members 210 between a first cell separator plate 215 and a second cell separator plate 220. In the exemplary embodiment, the first and second separator plates 215, 220 are identical. While Figures 2 illustrates flow field member 210 as a single component, as is discussed in more detail below, the flow field members 210 may be formed from several individual components and may also cooperate with the separator plates 220 to define fluid flow paths. Gaskets 225 may be employed generally for enhancing the seal between the first and second cell separator plates 215, 220 and the associated bipolar plate 210, and between MEA 205 and an adjacent separator plate 210.

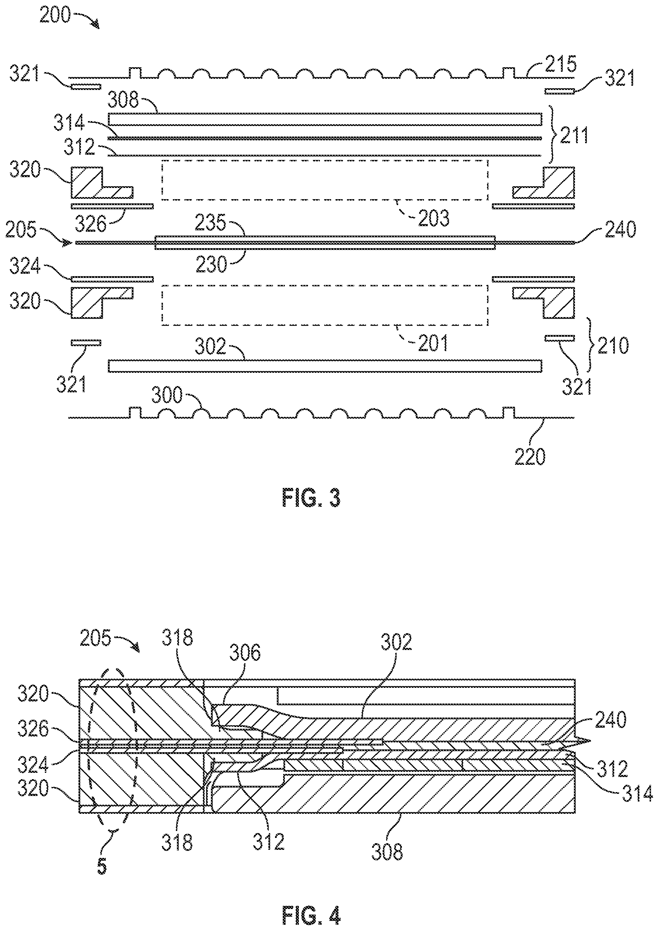

MEA 205 has a first electrode (e.g., anode, or oxygen electrode) 230 and a second electrode (e.g., cathode, or hydrogen electrode) 235 disposed on opposite sides of a proton exchange membrane (membrane) 240, best seen by referring to Figure 3. Flow field members 210, which are in fluid communication with electrodes 230 and 235 of an adjacent MEA 205, have a structure, to be discussed in more detail below, that define the flow fields adjacent to electrodes 230 and 235, and the sealing thereof. The cell components, particularly cell separator plates 215, 220, flow fields 210, and gaskets 225, may be formed with suitable manifolds or other conduits for fluid flow. In embodiments where a plurality of cells 200 are arranged into an electrochemical cell stack, one of the separator plates 215, 220 may be an end plate for the assembly.

In an embodiment, membrane 240 comprises electrolytes that are preferably solids or gels under the operating conditions of the electrochemical cell. Useful materials include proton conducting ionomers and ion exchange resins. Useful proton conducting ionomers include complexes comprising an alkali metal salt, alkali earth metal salt, a protonic acid, or a protonic acid salt. Useful complex-forming reagents include alkali metal salts, alkaline metal earth salts, and protonic acids and protonic acid salts. Counter-ions useful in the above salts include halogen ion, perchloric ion, thiocyanate ion, trifluoromethane sulfonic ion, borofluoric ion, and the like. Representative examples of such salts include, but are not limited to, lithium fluoride, sodium iodide, lithium iodide, lithium perchlorate, sodium thiocyanate, lithium trifluoromethane sulfonate, lithium borofluoride, lithium hexafluorophosphate, phosphoric acid, sulfuric acid, trifluoromethane sulfonic acid, and the like. The alkali metal salt, alkali earth metal salt, protonic acid, or protonic acid salt is complexed with one or more polar polymers such as a polyether, polyester, or polyimide, or with a network or cross-linked polymer containing the above polar polymer as a segment. Useful polyethers include polyoxyalkylenes, such as polyethylene glycol, polyethylene glycol monoether, and polyethylene glycol diether; copolymers of at least one of these polyethers, such as poly(oxyethylene-co-oxypropylene) glycol, poly(oxyethylene-co-oxypropylene) glycol monoether, and poly(oxyethylene-co-oxypropylene) glycol diether; condensation products of ethylenediamine with the above polyoxyalkylenes; and esters, such as phosphoric acid esters, aliphatic carboxylic acid esters or aromatic carboxylic acid esters of the above polyoxyalkylenes. Copolymers of, e.g., polyethylene glycol with dialkylsiloxanes, maleic anhydride, or polyethylene glycol monoethyl ether with methacrylic acid are known in the art to exhibit sufficient ionic conductivity to be useful.

Ion-exchange resins useful as proton conducting materials include hydrocarbon- and fluorocarbon-type resins. Hydrocarbon-type ion-exchange resins include phenolic resins, condensation resins such as phenol-formaldehyde, polystyrene, styrene-divinyl benzene copolymers, styrene-butadiene copolymers, styrene-divinylbenzene-vinylchloride terpolymers, and the like, that are imbued with cation-exchange ability by sulfonation, or are imbued with anion-exchange ability by chloromethylation followed by conversion to the corresponding quaternary amine.

Fluorocarbon-type ion-exchange resins may include hydrates of tetrafluoroethylene-perfluorosulfonyl ethoxyvinyl ether or tetrafluoroethylene-hydroxylated (perfluoro vinyl ether) copolymers. When oxidation and/or acid resistance is desirable, for instance, at the cathode of a fuel cell, fluorocarbon-type resins having sulfonic, carboxylic and/or phosphoric acid functionality are preferred. Fluorocarbon-type resins typically exhibit excellent resistance to oxidation by halogen, strong acids and bases. One family of fluorocarbon-type resins having sulfonic acid group functionality is NAFION™ resins (commercially available from E. I. du Pont de Nemours and Company, Wilmington, DE).

Electrodes 230 and 235 may comprise a catalyst suitable for performing the needed electrochemical reaction (i.e., electrolyzing water and producing hydrogen). Suitable catalyst include, but are not limited to, materials comprising platinum, palladium, rhodium, carbon, gold, tantalum, tungsten, ruthenium, iridium, osmium, alloys of at least one of the foregoing catalysts, and the like. Electrodes 230 and 235 may be formed on membrane 240, or may be layered adjacent to, but in contact with, membrane 240.

Referring now to FIGs. 3 - 5, an embodiment of a single electrochemical cell 200 is shown. It should be appreciated that an electrochemical cell system may have a plurality of such cells 200 arranged electrically in series or in parallel. In one embodiment, each of the cells 200 is fluidly coupled. On either end of the cell 200 a separator plate 215, 220 is arranged. In some embodiments, the separator plate 215, 220 may be referred to as a bipolar plate. The separator plates 215, 220 may incorporate one or more features that define a flow field. In an anode feed electrolysis cell, the flow field allows fluids to enter (water) and exit (water and oxygen gas) the reaction chamber 201 of the anode side cell 200. On the cathode side of such a cell a flow field allows the gaseous reactant (hydrogen) to flow from the reaction chamber 203 and exit the cell. The flow field 210 may be comprised of a number of components, such as a porous plate 302, a screen pack or one or more layers of carbon paper or carbon cloth. The flow field 210 allows water to flow to the oxygen electrode 230. On the cathode side of the cell, the flow field 211 may include one or more layers of carbon paper 312, carbon cloth 314 and a carbon insert 308 having channels to facilitate flow from the hydrogen electrode 235.

The periphery of the reaction chambers 201, 203 are defined by a pair of frame members 320. In the exemplary embodiment, the frame member 320 on the anode side of the cell 200 is identical to the frame member 320 on the cathode side of the cell. As will be discussed in more detail below, the orientation of the frame members 320 on opposite sides of the MEA 205 are oriented to allow passageways from one frame to be fluidly coupled to the ports of the adjacent frame member 320. In one embodiment, when multiple cells 200 are arranged in series, the frame members alternate in orientation along the length of the cell system to allow a direct fluid coupling of adjacent passageways and ports.

It should be appreciated that it is desirable to seal the cell 200 from the external environment. By sealing the reaction chambers 201, 203 the internal pressures developed during operation will not result in the reactant or product being flowing from the system, but rather will be delivered and received in a controlled and desired manner. To facilitate the sealing of the cell 200, gaskets 321 are arranged between the separator plates 215, 220 and the adjacent frame member 320. The gaskets 321 may include passageways and ports to allow the reactant (water) and product (hydrogen) to be transferred in and out of the cell 200 through similar openings in the separator plates 215, 220 and the frames 320.

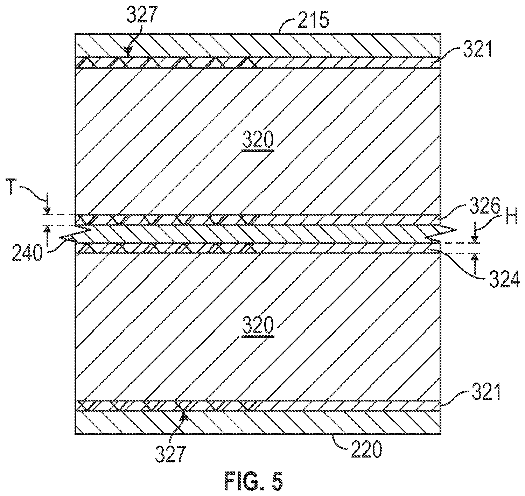

Similarly, the interface between the frame members 320 and the membrane 240 also includes gasket 324, 326 on the anode and cathode sides of the cell 200 respectively. As best seen in FIG. 5, each of the frame members 320 includes one or more cleat members 327 that engage the adjacent gaskets 321, 324, 326. The height "H" of the cleat 327 is equal to or less than the thickness "T" of the gaskets 326, 326. The cleats 327 assist in preventing the gaskets 326, 324 from migrating outward (creep) under operating pressures. It should be appreciated that this arrangement provides further advantages in that the cleats 327 do not penetrate the membrane 240. This allows thinner membranes to be used than in prior art devices. Further, since the cleats 327 do not penetrate the membrane 240, the cleats 327 may be axially aligned and do not interfere with each other when the cell 200 is preloaded. Further still advantages may be gained by allowing the cleats 327 to be axially aligned in that the same frame member 320 may be used on both the anode and cathode side of the cell 200.

It should be further appreciated that the arrangement of gaskets 324, 326 on both sides of the membrane 240 provides advantages in that the thickness of the membrane 240 may be changed without changing the volume of the reaction chambers 201, 203. Thus the membrane 240 may be changed without having to modify the remainder of the cell 200 components (e.g. frame member, gaskets, flow field).

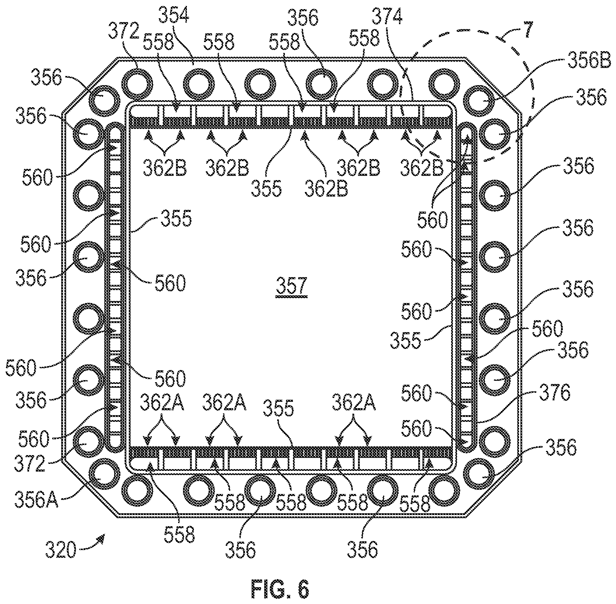

Referring now to Figures 6 - 7, an exemplary embodiment of a frame member 320 is shown for use with the cell 200 of Figures 3-5. In the exemplary embodiment, the frame member 320 is substantially square. However in other embodiments, the frame member 320 may have other geometric shapes, such as but not limited to circular or rectangular for example. The frame member 320 includes a periphery portion 354. A plurality of circular openings 356 is disposed about the periphery portion 354. The openings 356 are sized to receive tie-rod members (not shown) as is known in the art to provide a clamping pressure on the cell 200 to the desired pre-load level. An inner edge 355 of the periphery portion 354 defines a central opening 357. In the exemplary embodiment. the central opening 357 defines a substantial portion of the respective anode or cathode reaction chamber. In one corner of frame member 320, an opening 356A is formed with a slightly smaller diameter and with a smaller tolerance. Further another opening 356B is formed as an elongated slot. The arrangement of the openings 356, 356A, 356B allow for precise assembly without having an over constrained condition due to tolerance stack-up. In one embodiment, the frame member 320 may be the same as that described in commonly owned co-pending United States Patent Application entitled "Electrochemical Cell" (Attorney Docket No. PES0349US) which was filed concurrently herewith.

Arranged between the openings 356 and the edge 355 are a set of passageway openings 558 and a set of port openings 560. Extending between each of the set of passageway openings 558 and the opening 357 are a plurality of flow channels 362. The flow channels 362 are oriented towards the center area of the frame member 320 to define a flow path for fluids into and out of the cell 200. It should be appreciated that when the frame member 320 is arranged on the anode side of the cell 200, the flow channels 362A allow the reactant (e.g. water) to flow from the conduits defined by the passageway openings 558 and into the flow field defined by the protrusions 300 (FIG 3) of separator plate 220. The reactant flows across the width of the cell 200 with a portion of the reactant being electrolyzed by the electrode 230. The resulting anode product (water plus oxygen gas) is transported to the flow channels 362B and into the connected openings 558 where the mixture exits the cell 200.

Similarly, when the frame member 320 is used on the cathode side of the cell 200, cathode product (hydrogen gas) is formed at the cathode electrode 235 (FIG. 3). The hydrogen flows through the carbon paper and fiber 312, 324 and into channels (not shown) formed in the carbon insert to the flow channels 362, allowing the hydrogen gas to exit the cell 200. In the exemplary embodiment, each rectangular opening 358 is fluidly coupled to eight (8) flow channels 362, with each of the flow channels 362 has a width of 0.020 inches (0.508 mm) and is 0.020 inches (0.508 mm) deep.

The frame member 320 includes a lip 318 extending from the inner edge of the frame member adjacent the membrane 240. The lip 318 extends into the central opening about the entire periphery of the frame member.

As discussed above, the same frame member 320 may be used on both the anode and cathode side of the cell 200. It should be appreciated that it is desirable to maintain the cathode product (e.g. hydrogen gas) separate from the reactant (e.g. water) and the anode product (e.g water and oxygen gas). Therefore, the cathode frame member 320 is rotated 90 degrees relative to the anode frame member 320. In this way, the anode passageway openings 558 are axially aligned with the cathode port openings 560. In an embodiment having a series of cells 200, this alternating of the orientation of the frame member 357 creates a series of separate passageways for the cathode product (e.g. hydrogen) and the reactant (e.g. water) and anode product (e.g. water and oxygen gas) while using an identical frame member 320 on both sides of the cell 200.

It should be appreciated that it is desirable to seal the cell 200 not only from the external environment, but also the passageway openings 558, the port openings 560, the central opening 357 and the tie-rod openings 356 from each other. In the exemplary embodiment, the frame member 320 includes several different sealing cleats 372, 374, 376 are arranged about each of the openings 356, 358, 360. In this embodiment, the cleats 374 extend about the periphery of the openings 558 and the central opening 357. Each of the sealing cleats 372, 374, 376 may comprise a plurality of ridges that extend about the periphery of the openings 356, 358, 360. These ridges engage a gasket member, such as seal 32, 324, 326 for example. As discussed above, the sealing cleats 372, 374, 376 further assist in holding the gasket/seal members and membrane in place under the operating pressures.

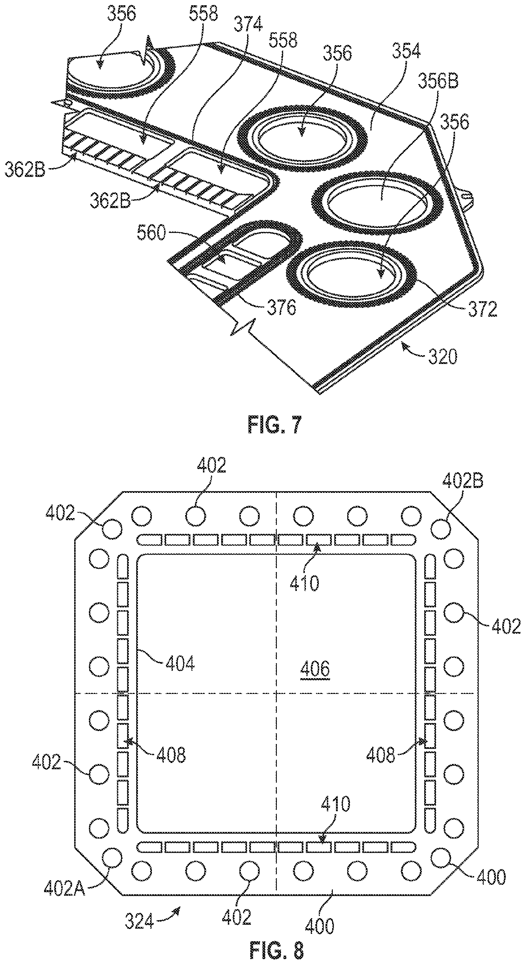

Referring now to FIG. 8, an exemplary gasket 324 is shown. It should be appreciated that while gasket 324 is discussed herein, the features of gasket 324 applied equally to gasket 326 and gasket 321. In one embodiment, gasket 324 and gasket 326 are identical. The gasket 324 is a generally planar member having a periphery portion 400. The inner edge 404 of the periphery portion 400 defines a central opening 406. In the exemplary embodiment, the inner edge 404 extends past (inward of) the inner perimeter of frame lip 318. Arranged about the periphery portion is a plurality of openings 402. The openings 402 are arranged to be axially aligned with the openings 356 of the frame member 320. Similar to the frame member 320, the gasket 324 also has a slot 402A and a tightly tolerance opening 402B that allows the cell 200 to be assembled without an over-constrained condition occurring due to tolerance stack up. A first pair of opposing passageway openings 408 is arranged on opposite sides of the central opening 406. A second pair of opposing port openings 410 is also arranged on opposite sides of the central opening. The openings 408, 410 are arranged to axially align with the corresponding port openings and passageway openings in the frame member 320, the other gaskets 321, 326 and separator plates 215, 220 to allow reactant, anode product and cathode product to be transferred to and away from the cell 200.

## Claims

1. An electrochemical cell (200) comprising:
a first frame (320), the first frame (320) having at least one first cleat feature (327) arranged on one side, the at least one first cleat feature (327) having a first height (H);
a second frame (320), the second frame (320) having at least one second cleat feature (327) arranged on one side, the at least one second cleat feature (327) having a second height (H);
a membrane electrode assembly (205) (MEA) disposed between the first frame (320) and the second frame (320), the MEA (205) having a first electrode (230) disposed on a first side of a membrane (240), the MEA (205) further having a second electrode (235) disposed on a second side opposite the first electrode (230);
a first gasket (324,326) disposed between the membrane (240) and the first frame (320), the first gasket (324,326) engaging the at least one first cleat feature 327, the first gasket (324,326) having a first thickness (T); and
a second gasket (324,326) disposed between the membrane (240) and the second frame (320), the second gasket (324,326) engaging the at least one second cleat feature (327), the second gasket (324,326) having a second thickness (T),
wherein the first height (H) is less than or equal to the first thickness (T), and the second height (H) is less than or equal to the second thickness (T), such that the first cleat feature (327) and the second cleat feature (327) are not able to penetrate the MEA (205);
wherein the first frame (320) includes a first lip (318) along a side adjacent the first gasket (324,326), the lip (318) extending away from an inner perimeter of the first frame (320), wherein the first lip (318) has an inner perimeter that is larger than an inner edge of the first gasket (324,326).

2. The electrochemical cell (200) of claim 1 wherein the first frame (320) is identical to the second frame (320).

3. The electrochemical cell (200) of claim 1 wherein the second frame (320) includes a second lip (318) along a side adjacent the second gasket (324,326), the second lip (318) extending away from an inner perimeter of the second frame (320), wherein the second lip (318) has an inner perimeter that is larger than an inner edge of the second gasket (324,326).

4. The electrochemical cell (200) of claim 3, wherein the first frame (320) and the second frame (320) each have a plurality of openings (356,357) extending therethrough, the first frame (320) having at least one third cleat feature (327) extending about each of the plurality of openings (356,357) in the first frame (320), and the second frame (320) having at least on fourth cleat feature (327) extending about each of the plurality of openings (356,357) in the second frame (320).

5. The electrochemical cell (200) of any of the preceding claims wherein the membrane (240), the first gasket (324,326) and the second gasket (324,326) cooperate to form a seal between the first frame (320) and the second frame (320).

6. The electrochemical cell (200) of any of the preceding claims wherein the at least one first cleat feature (327) penetrates into the first gasket (324,326) and the at least one second cleat feature (327) penetrates into the second gasket (324,326).

7. The electrochemical cell (200) of any of the preceding claims, wherein each of the pair of frame members (320) further includes a first plurality of passageway openings (558) and an opposing second plurality of passageway openings(558), the first plurality of passageway openings (558) and the second plurality of passageway openings (558) being disposed between the at least one first cleat member and a central opening (357), each of the pair of frame members further including a plurality of channels (362) between the first plurality of passageway openings (558) and the second plurality of passageway openings (558).

8. The electrochemical cell (200) of claim 7, wherein each of the pair of frame members includes a first plurality of ports (560) and an opposing second plurality of ports, the first plurality of ports (560) and the second plurality of ports being disposed between the at least one first cleat member and the central opening (357), the first plurality of ports and second plurality of ports (560) being rotated 90 degrees relative to the first plurality of passageway openings (558) and the second plurality of passageway openings (558).

9. The electrochemical cell (200) of claim 8 wherein the first plurality of passageway openings (558) of the first frame (320) member being fluidly coupled to the first plurality of ports (560) in the second frame (320) member, and the second plurality of passageway openings (558) in the first frame (320) member being fluidly coupled to the second plurality of ports (560) in the second frame (320) member.

10. The electrochemical cell (200) of claim 9, wherein each of the pair of frame members further includes an at least one second cleat member disposed about the periphery of the first plurality of ports (560) and at least one third cleat member disposed about the periphery of the second plurality of ports (560), the at least one second cleat member and the at least one third cleat member engaging one of the first gasket (324,326) and the second gasket (324,326).

11. The electrochemical cell (200) of claim 10 wherein each of the pair of frame members includes a plurality of openings (356) disposed about a frame periphery the plurality of openings (356) being disposed a greater distance from the central opening (357) than the first plurality of passageway openings (558), the second plurality of passageway openings (558), the first plurality of ports (560), and the second plurality of ports (560); and
wherein each of the pair of frame members (320) includes at least one fourth cleat member (372) disposed about the periphery of each of the plurality of openings (356).

12. The electrochemical cell of (200) claim 10, wherein each of the pair of frame members includes a plurality of openings (356) disposed about a frame periphery the plurality of openings (356) being disposed a greater distance from the central opening (357) than the first plurality of passageway openings (558), the second plurality of passageway openings (558), the first plurality of ports (560), and the second plurality of ports (560).

13. The electrochemical cell (200) of claim 12, wherein each of the pair of frame members (320) includes at least one fourth cleat member (372) disposed about the periphery of each of the plurality of openings (356).

## Patentansprüche

1. Elektrochemische Zelle (200), umfassend:
einen ersten Rahmen (320), wobei der erste Rahmen (320) zumindest eine erste Klemmfunktion (327) aufweist, welche an einer Seite eingerichtet ist, wobei die zumindest eine erste Klemmfunktion (327) eine erste Höhe (H) aufweist;
einen zweiten Rahmen (320), wobei der zweite Rahmen (320) zumindest eine zweite Klemmfunktion (327) aufweist, welche an einer Seite eingerichtet ist, wobei die zumindest eine zweite Klemmfunktion (327) eine zweite Höhe (H) aufweist;
eine Membranelektrodenanordnung (205) (MEA), welche zwischen dem ersten Rahmen (320) und dem zweiten Rahmen (320) angeordnet ist, wobei die MEA (205) eine erste Elektrode (230) aufweist, welche an einer ersten Seite einer Membran (240) angeordnet ist, wobei die MEA (205) weiter eine zweite Elektrode (235) aufweist, welche auf einer zweiten Seite gegenüber der ersten Elektrode (230) angeordnet ist;
eine erste Dichtung (324,326), welche zwischen der Membran (240) und dem ersten Rahmen (320) angeordnet ist, wobei die erste Dichtung (324,326) in die zumindest eine erste Klemmfunktion 327 eingreift, wobei die erste Dichtung (324,326) eine erste Dicke (T) aufweist; und
eine zweite Dichtung (324,326), welche zwischen der Membran (240) und dem zweiten Rahmen (320) angeordnet ist, wobei die zweite Dichtung (324,326) in die zumindest eine zweite Klemmfunktion (327) eingreift, wobei die zweite Dichtung (324,326) eine zweite Dicke (T) aufweist,
wobei die erste Höhe (H) kleiner oder gleich der ersten Dicke (T) ist, und die zweite Höhe (H) kleiner oder gleich der zweiten Dicke (T) ist, sodass die erste Klemmfunktion (327) und die zweite Klemmfunktion (327) nicht in der Lage sind, die MEA (205) zu durchdringen;
wobei der erste Rahmen (320) eine erste Lippe (318) entlang einer zu der ersten Dichtung (324,326) benachbarten Seite beinhaltet, wobei sich die Lippe (318) weg von einem inneren Umfang des ersten Rahmens (320) erstreckt, wobei die erste Lippe (318) einen inneren Umfang aufweist, welcher größer ist als ein innerer Rand der ersten Dichtung (324,326).

2. Elektrochemische Zelle (200) nach Anspruch 1, wobei der erste Rahmen (320) identisch mit dem zweiten Rahmen (320) ist.

3. Elektrochemische Zelle (200) nach Anspruch 1, wobei der zweite Rahmen (320) eine zweite Lippe (318) entlang einer zu der zweiten Dichtung (324,326) benachbarten Seite beinhaltet, wobei sich die zweite Lippe (318) weg von einem inneren Umfang des zweiten Rahmens (320) erstreckt, wobei die zweite Lippe (318) einen inneren Umfang aufweist, welcher größer ist als ein innerer Rand der zweiten Dichtung (324,326).

4. Elektrochemische Zelle (200) nach Anspruch 3, wobei der erste Rahmen (320) und der zweite Rahmen (320) jeweils eine Vielzahl von Öffnungen (356,357) aufweisen, welche sich dadurch erstrecken, wobei der erste Rahmen (320) zumindest eine dritte Klemmfunktion (327) aufweist, welche sich rund um jede aus der Vielzahl von Öffnungen (356,357) in dem ersten Rahmen (320) erstreckt, und wobei der zweite Rahmen (320) zumindest eine vierte Klemmfunktion (327) aufweist, welche sich rund um jede aus der Vielzahl von Öffnungen (356,357) in dem zweiten Rahmen (320) erstreckt.

5. Elektrochemische Zelle (200) nach einem der vorstehenden Ansprüche, wobei die Membran (240), die erste Dichtung (324,326) und die zweite Dichtung (324,326) zusammenarbeiten, um eine Abdichtung zwischen dem ersten Rahmen (320) und dem zweiten Rahmen (320) zu bilden.

6. Elektrochemische Zelle (200) nach einem der vorstehenden Ansprüche, wobei die zumindest eine erste Klemmfunktion (327) in die erste Dichtung (324,326) eindringt und die zumindest eine zweite Klemmfunktion (327) in die zweite Dichtung (324,326) eindringt.

7. Elektrochemische Zelle (200) nach einem der vorstehenden Ansprüche, wobei jedes von dem Paar von Rahmenelementen (320) weiter eine erste Vielzahl von Durchgangsöffnungen (558) und eine gegenüberliegende zweite Vielzahl von Durchgangsöffnungen (558) beinhaltet, wobei die erste Vielzahl von Durchgangsöffnungen (558) und die zweite Vielzahl von Durchgangsöffnungen (558) zwischen dem zumindest einen ersten Klemmelement und einer zentralen Öffnung (357) angeordnet sind, wobei jedes von dem Paar von Rahmenelementen weiter eine Vielzahl von Kanälen (362) zwischen der ersten Vielzahl von Durchgangsöffnungen (558) und der zweiten Vielzahl von Durchgangsöffnungen (558) beinhaltet.

8. Elektrochemische Zelle (200) nach Anspruch 7, wobei jedes von dem Paar von Rahmenelementen eine erste Vielzahl von Anschlüssen (560) und eine gegenüberliegende zweite Vielzahl von Anschlüssen beinhaltet, wobei die erste Vielzahl von Anschlüssen (560) und die zweite Vielzahl von Anschlüssen zwischen dem zumindest einen ersten Klemmelement und der zentralen Öffnung (357) angeordnet sind, wobei die erste Vielzahl von Anschlüssen und zweite Vielzahl von Anschlüssen (560) 90 Grad relativ zu der ersten Vielzahl von Durchgangsöffnungen (558) und der zweiten Vielzahl von Durchgangsöffnungen (558) gedreht sind.

9. Elektrochemische Zelle (200) nach Anspruch 8, wobei die erste Vielzahl von Durchgangsöffnungen (558) des Elements des ersten Rahmens (320) fluidisch an die erste Vielzahl von Anschlüssen (560) in dem Element des zweiten Rahmens (320) gekoppelt sind, und die zweite Vielzahl von Durchgangsöffnungen (558) in dem Element des ersten Rahmens (320) fluidisch an die zweite Vielzahl von Anschlüssen (560) in dem Element des zweiten Rahmens (320) gekoppelt sind.

10. Elektrochemische Zelle (200) nach Anspruch 9, wobei jedes von dem Paar von Rahmenelementen weiter zumindest ein zweites Klemmelement, welches rund um den Umfang der ersten Vielzahl von Anschlüssen (560) angeordnet ist, und zumindest ein drittes Klemmelement, welches rund um den Umfang der zweiten Vielzahl von Anschlüssen (560) angeordnet ist, beinhaltet, wobei das zumindest eine zweite Klemmelement und das zumindest eine dritte Klemmelement in eine von der ersten Dichtung (324,326) und der zweiten Dichtung (324,326) eingreifen.

11. Elektrochemische Zelle (200) nach Anspruch 10, wobei jedes von dem Paar von Rahmenelementen eine Vielzahl von Öffnungen (356) beinhaltet, welche rund um einen Rahmenumfang angeordnet sind, wobei die Vielzahl von Öffnungen (356) in einem größeren Abstand von der zentralen Öffnung (357) angeordnet sind als die erste Vielzahl von Durchgangsöffnungen (558), die zweite Vielzahl von Durchgangsöffnungen (558), die erste Vielzahl von Anschlüssen (560) und die zweite Vielzahl von Anschlüssen (560); und
wobei jedes von dem Paar von Rahmenelementen (320) zumindest ein viertes Klemmelement (372) beinhaltet, welches rund um den Umfang von jeder aus der Vielzahl von Öffnungen (356) angeordnet ist.

12. Elektrochemische Zelle (200) nach Anspruch 10, wobei jedes von dem Paar von Rahmenelementen eine Vielzahl von Öffnungen (356) beinhaltet, welche rund um einen Rahmenumfang angeordnet sind, wobei die Vielzahl von Öffnungen (356) in einem größeren Abstand von der zentralen Öffnung (357) angeordnet sind als die erste Vielzahl von Durchgangsöffnungen (558), die zweite Vielzahl von Durchgangsöffnungen (558), die erste Vielzahl von Anschlüssen (560) und die zweite Vielzahl von Anschlüssen (560).

13. Elektrochemische Zelle (200) nach Anspruch 12, wobei jedes von dem Paar von Rahmenelementen (320) zumindest ein viertes Klemmelement (372) beinhaltet, welches rund um den Umfang von jeder aus der Vielzahl von Öffnungen (356) angeordnet ist.

## Revendications

1. Cellule électrochimique (200) comprenant :
un premier cadre (320), le premier cadre (320) ayant au moins un premier élément de cale (327) agencé sur un côté, l'au moins un premier élément de cale (327) ayant une première hauteur (H) ;
un deuxième cadre (320), le deuxième cadre (320) ayant au moins un deuxième élément de cale (327) agencé sur un côté, l'au moins un deuxième élément de cale (327) ayant une deuxième hauteur (H) ;
un ensemble membrane-électrodes (205) (MEA) disposé entre le premier cadre (320) et le deuxième cadre (320), le MEA (205) ayant une première électrode (230) disposée sur un premier côté d'une membrane (240), le MEA (205) ayant en outre une deuxième électrode (235) disposée sur un deuxième côté opposé à la première électrode (230) ;
un premier joint d'étanchéité (324, 326) disposé entre la membrane (240) et le premier cadre (320), le premier joint d'étanchéité (324, 326) s'engageant avec l'au moins un premier élément de cale 327, le premier joint d'étanchéité (324, 326) ayant une première épaisseur (T) ; et
un deuxième joint d'étanchéité (324, 326) disposé entre la membrane (240) et le deuxième cadre (320), le deuxième joint d'étanchéité (324, 326) s'engageant avec l'au moins un deuxième élément de cale (327), le deuxième joint d'étanchéité (324, 326) ayant une deuxième épaisseur (T),
dans laquelle la première hauteur (H) est inférieure ou égale à la première épaisseur (T), et la deuxième hauteur (H) est inférieure ou égale à la deuxième épaisseur (T), de sorte que le premier élément de cale (327) et le deuxième élément de cale (327) ne puissent pas pénétrer dans le MEA (205) ;
dans laquelle le premier cadre (320) comporte une première lèvre (318) le long d'un côté adjacent au premier joint d'étanchéité (324, 326), la lèvre (318) s'étendant en s'éloignant d'un périmètre interne du premier cadre (320), où la première lèvre (318) a un périmètre interne qui est plus grand qu'un bord interne du premier joint d'étanchéité (324, 326).

2. Cellule électrochimique (200) de la revendication 1, dans laquelle le premier cadre (320) est identique au deuxième cadre (320).

3. Cellule électrochimique (200) de la revendication 1, dans laquelle le deuxième cadre (320) comporte une deuxième lèvre (318) le long d'un côté adjacent au deuxième joint d'étanchéité (324, 326), la deuxième lèvre (318) s'étendant en s'éloignant d'un périmètre interne du deuxième cadre (320), où la deuxième lèvre (318) a un périmètre interne qui est plus grand qu'un bord interne du deuxième joint d'étanchéité (324, 326).

4. Cellule électrochimique (200) de la revendication 3, dans laquelle chacun du premier cadre (320) et du deuxième cadre (320) a une pluralité d'ouvertures (356, 357) s'étendant à travers celui-ci, le premier cadre (320) ayant au moins un troisième élément de cale (327) s'étendant autour de chacune de la pluralité d'ouvertures (356, 357) dans le premier cadre (320), et le deuxième cadre (320) ayant au moins un quatrième élément de cale (327) s'étendant autour de chacune de la pluralité d'ouvertures (356, 357) dans le deuxième cadre (320).

5. Cellule électrochimique (200) de l'une des revendications précédentes, dans laquelle la membrane (240), le premier joint d'étanchéité (324, 326) et le deuxième joint d'étanchéité (324, 326) coopèrent pour former une étanchéité entre le premier cadre (320) et le deuxième cadre (320).

6. Cellule électrochimique (200) de l'une des revendications précédentes, dans laquelle l'au moins un élément de cale (327) pénètre dans le premier joint d'étanchéité (324, 326) et l'au moins un deuxième élément de cale (327) pénètre dans le deuxième joint d'étanchéité (324, 326).

7. Cellule électrochimique (200) de l'une des revendications précédentes, dans laquelle chacun de la paire d'éléments de cadre (320) comporte en outre une première pluralité d'ouvertures de passage (558) et une deuxième pluralité d'ouvertures de passage opposées (558), la première pluralité d'ouvertures de passage (558) et la deuxième pluralité d'ouvertures de passage (558) étant disposées entre l'au moins un premier élément de cale et une ouverture centrale (357), chacun de la paire d'éléments de cadre comportant en outre une pluralité de canaux (362) entre la première pluralité d'ouvertures de passage (558) et la deuxième pluralité d'ouvertures de passage (558).

8. Cellule électrochimique (200) de la revendication 7, dans laquelle chacun de la paire d'éléments de cadre comporte une première pluralité d'orifices (560) et une deuxième pluralité d'orifices opposés, la première pluralité d'orifices (560) et la deuxième pluralité d'orifices étant disposés entre l'au moins un premier élément de cale et l'ouverture centrale (357), la première pluralité d'orifices et la deuxième pluralité d'orifices (560) étant tournés à 90 degrés par rapport à la première pluralité d'ouvertures de passage (558) et la deuxième pluralité d'ouvertures de passage (558).

9. Cellule électrochimique (200) de la revendication 8, dans laquelle la première pluralité d'ouvertures de passage (558) du premier élément de cadre (320) étant couplées de manière fluidique à la première pluralité d'orifices (560) dans le deuxième élément de cadre (320), et la deuxième pluralité d'ouvertures de passage (558) dans le premier élément de cadre (320) étant couplées de manière fluidique à la deuxième pluralité d'orifices (560) dans le deuxième élément de cadre (320).

10. Cellule électrochimique (200) de la revendication 9, dans laquelle chacun de la paire d'éléments de cadre comporte en outre au moins un deuxième élément de cale disposé autour de la périphérie de la première pluralité d'orifices (560) et au moins un troisième élément de cale disposé autour de la périphérie de la deuxième pluralité d'orifices (560), l'au moins un deuxième élément de cale et l'au moins un troisième élément de cale s'engageant avec l'un du premier joint d'étanchéité (324, 326) et du deuxième joint d'étanchéité (324, 326).

11. Cellule électrochimique (200) de la revendication 10, dans laquelle chacun de la paire d'éléments de cadre comporte une pluralité d'ouvertures (356) disposées autour d'une périphérie de cadre, la pluralité d'ouvertures (356) étant disposées à une distance plus grande de l'ouverture centrale (357) que la première pluralité d'ouvertures de passage (558), la deuxième pluralité d'ouvertures de passage (558), la première pluralité d'orifices (560) et la deuxième pluralité d'orifices (560) ; et
dans laquelle chacun de la paire d'éléments de cadre (320) comporte au moins un quatrième élément de cale (372) disposé autour de la périphérie de chacune de la pluralité d'ouvertures (356).

12. Cellule électrochimique (200) de la revendication 10, dans laquelle chacun de la paire d'éléments de cadre comporte une pluralité d'ouvertures (356) disposées autour d'une périphérie de cadre, la pluralité d'ouvertures (356) étant disposées à une distance plus grande de l'ouverture centrale (357) que la première pluralité d'ouvertures de passage (558), la deuxième pluralité d'ouvertures de passage (558), la première pluralité d'orifices (560) et la deuxième pluralité d'orifices (560).

13. Cellule électrochimique (200) de la revendication 12, dans laquelle chacun de la paire d'éléments de cadre (320) comporte au moins un quatrième élément de cale (372) disposé autour de la périphérie de chacune de la pluralité d'ouvertures (356).
